# DEMANDE DE BREVET EUROPEEN

(11) **EP 0 755 107 A1**
(43) Date de publication de la demande: **22.01.1997**
(21) Numéro de dépôt: 96401583.8
(22) Date de dépôt: 17.07.1996
(51) Int. Cl.: H02H 3/04, H04M 3/18

(54) **Circuit de communication à signalisation de défaut et module de test associé**

(30) Priorité: 20.07.1995 FR 9508808
(71) Demandeur: ALCATEL CABLE INTERFACE, F-08330 Vrigne aux Bois (FR)
(72) Inventeur: Audeval, Fabrice, 08000 Charleville Mezieres (FR)
(74) Mandataire: Buffiere, Michelle

(57) **Abrégé**

Le circuit de commutation comporte un ensemble de raccordement de N lignes d'un câble et de N jarretières, N modules de protection des lignes et une lampe de signalisation de défaut sur au moins l'une des N lignes. Il est caractérisé en ce qu'il comporte en outre un disjoncteur à déclenchement thermique (10), monté en série dans un circuit d'écoulement de défaut à la masse (4) pour les N modules de protection et prévu pour contrôler l'alimentation de ladite lampe quand il est déclenché.

Application : tête de câble téléphonique.

## Description

La présente invention concerne les systèmes de communication assurant le raccordement de lignes d'un câble de transmission et de jarretières et la protection à ce niveau contre des défauts tels que des surtensions sur ces lignes.

Elle porte plus particulièrement sur un circuit de communication à signalisation de défaut et sur un module de test associé.

De manière connue, dans un système de communication comportant au moins un ensemble de raccordement de N lignes d'un câble téléphonique et de N jarretières, des modules de protection sont affectés aux lignes individuelles et enfichés dans des alvéoles prévues à cet effet dans chaque ensemble de protection. Chacun de ces modules de protection assure en général la continuité électrique entre l'une des lignes et l'une des jarretières quand il est enfiché dans l'ensemble de raccordement et la coupure entre cette ligne et cette jarretière quand il est rétiré.
Pour la fonction de protection des lignes individuelles, les modules de protection comportent un parafoudre tripolaire à gaz ou deux parafoudres bipolaires et un moyen de court-circuit associé à chaque parafoudre et sensible à la température de celui-ci, qui sont reliés aux deux fils de la ligne concernée et la masse dans l'ensemble de raccordement. Chaque parafoudre écoule à la masse le courant dû à des défauts temporaires et de courte durée, mais est court-circuité pour la mise définitive de la ligne à la masse lors de défauts relativement longs et/ou importants sur la ligne. Bien entendu chaque module de protection peut comporter des moyens de protection supplémentaire, tels que deux varistances à coefficient de température positif montées chacune en série entre l'un des fils de la ligne et l'un des fils de la jarretière.

Le document FR-A-2 710 793 décrit un tel module de protection, dans lequel est également intégrée une lampe de signalisation de défaut sur la ligne individuelle protégée. Cette lampe est alimentée directement par la ligne et est choisie pour présenter une tension de seuil d'allumage comprise entre la tension nominale de la ligne et la tension d'amorçage de chaque parafoudre. Elle s'allume lors d'un défaut supérieur à cette tension de seuil d'allumage mais par contre s'éteint quand la ligne est mise à la masse.

Le document US-A 4862 314 décrit un module de protection comportant deux parafoudres bipolaires, un moyen de court-circuit de ces parafoudres et un circuit interne d'alarme à diode électroluminescente de signalisation de défaut sur la ligne. Ce circuit d'alarme est conçu pour donner l'information de défaut et pour permettre alors l'alimentation de cette diode à partir d'une source extérieure au module de protection. A ce dernier effet, cette diode est reliée à la source d'alimentation et à un interrupteur commandé monté dans le circuit d'alarme. Cet interrupteur est normalement ouvert, c'est-à-dire en l'absence de défaut sur la ligne, et est actionné en fermeture lors d'un défaut provoquant la mise à la masse de la ligne. Ce circuit d'alarme à interrupteur commandé est de réalisation complexe.

En outre, selon ce dernier document, une lampe de signalisation générale de défaut peut être associée à un ou des ensembles de raccordement équipés des modules de protection des lignes. Cette lampe est alimentée par la source extérieure et est par ailleurs reliée aux circuits d'alarme des différents modules de protection, pour être ainsi connectée à la masse et alors s'allumer dès que l'interrupteur commandé du circuit d'alarme de l'un des modules de protection est actionné en fermeture.

La présente invention a pour but de réaliser une protection de lignes individuelles de transmission et une signalisation générale de défaut sur l'une quelconque de ces lignes, sans nécessiter un circuit spécifique particulier et complexe dans les modules de protection de ces lignes pour donner l'information de défaut. Elle a également pour but de réaliser un circuit de test associé à l'ensemble résultant de raccordement, à protection des lignes et signalisation de défaut, pour détecter la ou les lignes ayant donné lieu à la signalisation de défaut.

Elle a pour objet un circuit de communication à signalisation de défaut, comportant un ensemble de raccordement de N lignes d'un câble et de N jarretières, N modules de protection des N lignes individuelles raccordées aux jarretières, une première lampe de signalisation de défaut sur au moins l'une des N lignes, et un circuit d'alimentation de ladite première lampe, chaque module étant équipé d'au moins un parafoudre et d'au moins un élément thermique de court-circuit associé, chacun relié à l'un des fils de l'une des lignes et destiné à écouler un courant de défaut de vers une masse, caractérisé en ce qu'il comporte en outre un disjoncteur à déclenchement thermique, reliant chaque parafoudre et chaque élément de court-circuit associé à ladite masse et comportant d'une part un interrupteur principal commandé, monté en série avec un organe thermique de commande et court-circuité par une première liaison directe en parallèle, pour l'écoulement dudit courant de défaut de l'une des lignes à ladite masse, et d'autre part un interrupteur auxiliaire couplé audit interrupteur principal et interposé sur ledit circuit d'alimentation de ladite première lampe pour l'alimentation de ladite première lampe quand ledit disjoncteur est déclenché.

Ce circuit de communication présente au moins l'une des caractéristiques additionnelles suivantes :
- ledit disjoncteur a une courbe de déclenchement de même allure globale que celle de déclenchement de l'élément de court-circuit de chaque parafoudre, mais ayant un retard par rapport au déclenchement de l'élément de court-circuit.
- ledit disjoncteur comporte une deuxième liaison directe de court-circuit de chaque composant en série avec ledit interrupteur principal, quand le disjoncteur est déclenché.
- le circuit de communication comporte un avertisseur sonore relié audit interrupteur auxiliaire, pour l'alimentation dudit avertisseur sonore avec ladite première lampe.
- ledit avertisseur sonore est commun à plusieurs ensembles de raccordement et relié à l'interrupteur auxiliaire du disjoncteur de chaque ensemble de raccordement.
- chaque module de protection comporte deux éléments de court-circuit munis chacun d'une liaison de bouclage de l'un des fils de la ligne sur l'autre fil de cette ligne quand l'élément de court-circuit correspondant est déclenché.
- le circuit de communication comporte en outre un module de test desdits modules de protection, comportant au moins une deuxième lampe de test, un cordon de test relié à chaque deuxième lampe et enfichable sur l'un des dits modules de protection alors testé, pour la connexion dudit circuit de test à la ligne protégée par le module de protection testé et l'alimentation de chaque deuxième lampe à partir de la ligne si le parafoudre relié à au moins l'un des fils de la ligne n'est pas court-circuité par ledit élément de court-circuit associé.
- ledit module de test comporte une seule deuxième lampe et un pont de quatre diodes pour l'alimentation de la seule deuxième lampe à partir de l'un quelconque des deux fils de ligne, protégée par le module de protection testé.

Les caractéristiques et avantages de l'invention ressortiront de la description faite ci-après en référence aux dessins ci-annexés, dans lesquels :
- la figure 1 est un schéma illustrant un circuit de communication selon l'invention,
- la figure 2 illustre des courbes de déclenchement d'un élément de court-circuit associé à chaque parafoudre du circuit de communication et d'un disjoncteur de ce circuit,
- la figure 3 est un schéma d'une variante de réalisation du circuit de communication selon la figure 1, équipé en outre d'un module de test des modules de protection de ce circuit.

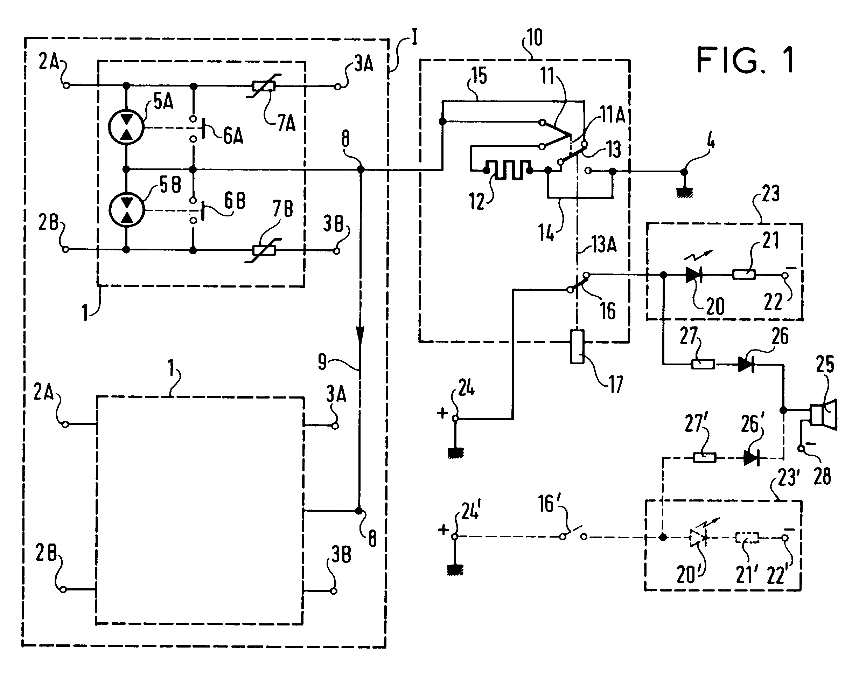

Dans la figure 1, on a illustré N modules de protection identiques 1, qui sont affectés à un ensemble de raccordement I de N lignes d'un câble téléphonique et de N jarretières dans lequel ils sont enfichés. Un tel ensemble de raccordement I est en tant que tel bien connu, aussi le raccordement de chaque ligne et de chaque jarretière qui s'effectue sur des paires de contacts n'a pas été représenté pour éviter des surcharges correspondantes.

On a simplement désigné, sur chacun des modules de protection 1, en 2A et 2B les points dits d'entrée qui se raccordent aux deux fils de l'une des lignes dans l'ensemble de raccordement et en 3A et 3B les points dits de sortie qui se raccordent aux deux fils d'une jarretière. On a en outre indiqué en 4 un point de masse pour l'ensemble de raccordement et pour les différents modules de protection qui y sont enfichés.

Dans cette figure 1, chaque module de protection comporte deux parafoudres bipolaires à gaz 5A et 5B, deux éléments de court-circuit 6A et 6B associés aux deux parafoudres et sensibles à la température de chacun d'eux pour court-circuiter chaque parafoudre, et deux varistances à coefficient de température positif 7A et 7B. On a en outre désigné en 8, le point dit point commun côté masse prévu sur chaque module de protection 1 et sur l'ensemble de raccordement I, pour l'écoulement du courant defaut de la ligne protégée vers le point de masse 4, les points 8 des différents modules de protection étant reliés les uns aux autres par un collecteur correspondant 9 prévu dans l'ensemble de raccordement I.

Chaque parafoudre 5A, 5B et son élément de court-circuit 6A, 6B sont reliés entre l'un des points d'entrée 2A, 2B et le point commun 8, pour une protection de type parallèle du fil concerné de la ligne elle-même concernée. Chaque varistance 7A, 7B est en série entre l'un des points d'entrée 2A, 2B et l'un des points de sortie 3A, 3B pour une protection de type série entre l'un des fils de la ligne et l'un des fils de la jarretière.

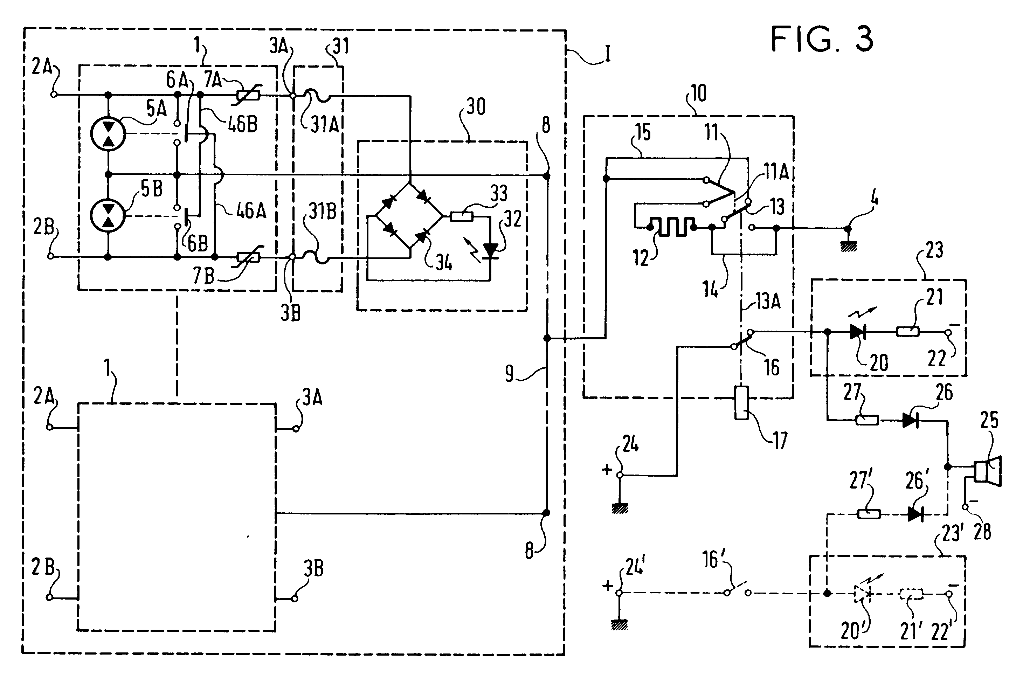

En variante, ces deux parafoudres bipolaires peuvent être remplacés par un seul parafoudre alors tripolaire. Les deux éléments de court-circuit peuvent être remplacés par un élément unique de court-circuit des deux parafoudres bipolaires ou du parafoudre tripolaire. De préférence, ces deux éléments de court-circuit sont associés au parafoudre tripolaire ou aux deux parafoudres bipolaires, pour une réalisation simplifiée préférentielle du circuit de test associé, ainsi que décrit ci-après (figure 3).

Selon l'invention, les N modules de protection sont reliés au point de masse 4 à travers un dispositif commun 10 qui est contrôlé par l'intensité du courant de défaut écoulé à la masse à travers lui. Ce dispositif 10 est un disjoncteur adapté à déclenchement thermique, qui est relié en série entre le point commun 8 et le point de masse 4.

Ainsi que représenté, ce disjoncteur thermique comporte un bilame de commande 11, une résistance 12 et un interrupteur commandé 13, tous trois montés en série les uns avec les autres entre les points 8 et 4. Le bilame 11 commande l'interrupteur commandé 13 en ouverture, cet interrupteur représenté ouvert étant fermé dans les conditions normales, c'est-à-dire en l'absence de défaut ayant provoqué le déclenchement de l'un et/ou l'autre des parafoudres d'au moins l'un des modules de protection.

Ce bilame 11 est constitué par deux lames métalliques, choisies de nature différente et soudées à plat l'une à l'autre, qui ont des coefficients de dilatation différents. Il s'échauffe sous l'effet du courant qui le traverse et se déforme d'autant plus que l'intensité de ce courant est élevée. Il est montée à proximité de l'interrupteur commandé 13, pour que sa déformation par conduction thermique assure l'actionnement de l'interrupteur 13, ainsi que schématisé par la commande correspondante 11A illustrée en traits interrompus.

Ce disjoncteur thermique adapté 10 comporte en outre une première liaison 14 de court-circuit de l'interrupteur 13, pour la continuité de liaison d'écoulement à la masse du courant de défaut quand cet interrupteur est ouvert. Il comporte également une deuxième liaison 15 de court-circuit du bilame 11 et de la résistance 12, quand l'interrupteur 13 est ouvert, pour une liaison d'écoulement direct à la masse du courant de défaut, sans risque d'endommager le bilame, lors de fortes intensités de ce courant.

Ce disjoncteur thermique comporte par ailleurs un interrupteur auxiliaire 16, qui est commandé par l'interrupteur dit principal 13 par une liaison mécanique de couplage 13A entre eux, mais est indépendant du circuit de masse auquel appartient l'interrupteur principal 13 pour les N modules de protection 1.

L'interrupteur auxilaire 16 appartient à un circuit de signalisation de défaut, qui est affecté à l'ensemble de raccordement I et aux modules de protection 1 enfichés dans celui-ci et comporte une diode électroluminescente 20.

Il est à cet effet relié d'une part à cette diode 20, elle-même reliée à travers une résistance série 21 à un point d'alimentation 22, auquel est connectée une source de tension continue non représentée et typiquement négative, et d'autre part à la masse au point 24, pour l'alimentation et l'allumage de cette diode électroluminescente dès que le disjoncteur est déclenché. La diode 20 et la résistance 21 sont montées en série sur une carte de circuit imprimé 23, dite carte de signalisation de défaut.

On note en outre qu'un bouton de commande 17 sur le disjoncteur permet à volonté de le déclencher ou de l'enclencher manuellement.

Avantageusement ce même interrupteur auxiliaire 16 est également relié à un avertisseur sonore 25, qui est affecté à l'ensemble de raccordement I et de préférence également à plusieurs autres ensembles de raccordement analogues dans un central téléphonique, et est par ailleurs relié en un point d'alimentation 28 à une source d'alimentation négative.

De tels autres ensembles de raccordement n'ont pas été illustrés pour éviter les surcharges. Ils ont chacun leur propre disjoncteur qui est analogue au disjoncteur de l'ensemble de raccordement I et dont l'interrupteur auxiliaire est seul représenté dans le circuit d'alimentation de la diode de signalisation de défaut correspondante.

Ainsi, pour un seul autre ensemble de raccordement on a donc représenté l'interrupteur auxiliaire 16' du disjoncteur qui lui est associé et la diode 20' de signalisation de défaut.

Cette diode 20' est pareillement reliée à travers une résistance série 21' à un point d'alimentation 22' et à travers l'interrupteur auxiliaire 16' à un point de masse 24'. Les points d'alimentation 22, 22' et 28 sont reliés à la même source d'alimentation commune ou à des sources d'alimentation individuelles ayant alors leur borne masse reliée en commun. La diode 20' et la résistance 21' sont montées sur une carte de signalisation de défaut 23'.

L'avertisseur sonore 25 commun aux différents ensembles de raccordement est relié aux interrupteurs 16, 16' par des liaisons individuelles de découplage, comprenant chacune une diode anti-retour 26, 26' et une résistance série associée 27, 27', selon la liaison de découplage concernée.

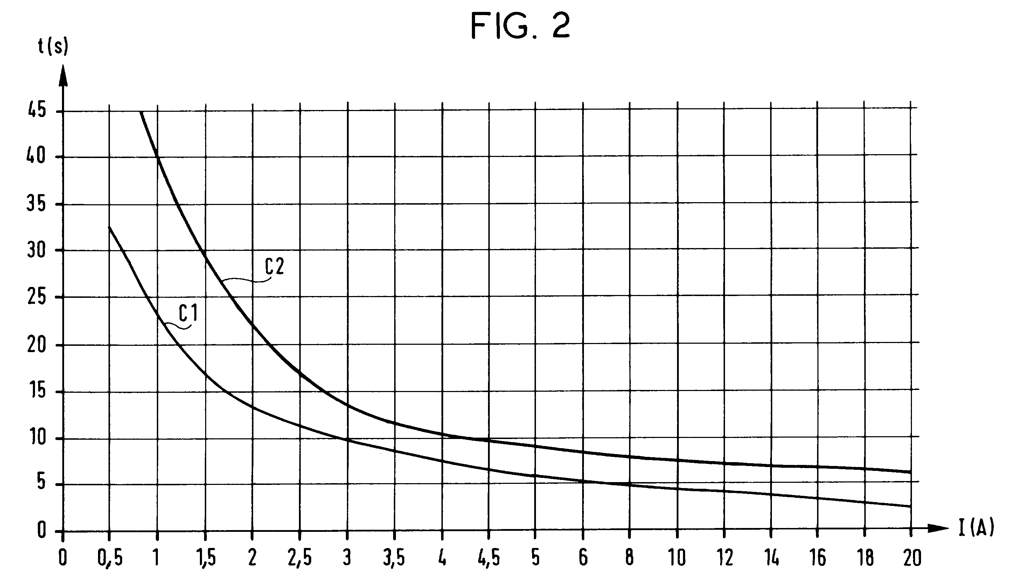

Dans la figure 2, on a illustré, dans le temps t exprimé en secondes, la courbe C₁ de déclenchement de l'un des éléments de court-circuit des parafoudres des modules de protection et la courbe C₂ de déclenchement du disjonteur thermique adapté associé selon l'invention aux modules de protection d'un même ensemble de raccordement, en fonction de l'intensité en Ampère I(A) du courant de défaut.

La courbe C₁ fait ressortir de manière bien connue que l'élément de court-circuit associé à chaque parafoudre se déclenche et court-circuite le parafoudre d'autant plus rapidement que l'intensité du courant de défaut qui traverse le parafoudre est élevée, du fait que cet élément de court-circuit est sensible à la chaleur dégagée par le parafoudre en correspondance avec cette intensité du courant de défaut.

La courbe C₂ a la même allure générale que la courbe C₁ mais est légèrement retardée par rapport à celle-ci, en présentant un retard limité et d'autant pour important que l'intensité du courant qui traverse le disjoncteur est faible. Ce retard est prévu pour que le courant dû à un défaut relativement faible et transitoire ne provoque pas le déclenchement du disjoncteur avant et éventuellement en l'absence du déclenchement de l'un et/ou l'autre des éléments de court-circuit des parafoudres de l'un des modules de protection.

En outre, on note que ce disjoncteur thermique, calibré par sa résistance entre le bilame et son interrupteur principal commandé, peut admettre sans dommage un courant permanent de défaut qui peut être très supérieur à la valeur de son courant nominal, du fait de la mise en court-circuit de sa résistance et du bilame de commande dès que le disjoncteur est déclenché.

La figure 3 correspond pour l'essentiel à la figure 1 et montre une variante préférée de réalisation de chaque module de protection et en outre un circuit de test 30 affecté, selon l'invention, au test successif des N modules de protection de l'ensemble de raccordement I.

Ce circuit de test 30 forme un module de test muni d'un cordon bifilaire de test 31, qui est enfichable successivement dans les N modules de protection , pour son raccordement aux points de sortie 3A, 3B de l'un quelconque de ces modules de protection 1. Il permet de détecter au fur et à mesure le ou les modules de protection défaillants, dans chacun desquels la ligne concernée est mise définitivement à la masse via le module de protection de cette ligne et le disjoncteur thermique. Ce ou ces modules de protection défaillants sont alors à changer.

Le circuit de test comporte une diode électroluminescente 32 et une résistance série 33. Il est alimenté directement par la ligne à travers un pont 34 de quatre diodes. Deux des bornes opposées de ce pont de diodes sont reliées aux deux fils 31A, 31B du cordon de test et ainsi aux deux fils de la ligne et les deux autres bornes sont reliées à la diode électroluminescente 32 et à la résistance série 33. Ce pont de diodes 34 permet de rendre la polarisation de la diode électroluminescente 32 indépendante de la polarité de chacun des deux fils de la ligne.

Dans la réalisation préférentielle des modules de protection 1 de cette figure 3, l'élément de court-circuit 6A, 6B de chacun des parafoudres assure également la liaison de l'un des fils de la ligne raccordée aux points d'entrée 2A, 2B à l'autre fil de cette ligne, quand le parafoudre concerné est court-circuité. Ceci est symbolisé par les deux interrupteurs commandés thermiquement par les parafoudres, qui constituent les deux éléments de court-circuit 6A, 6B, et par une liaison électrique 46A, 46B reliant la lame mobile de chacun de ces deux interrupteurs au fil de ligne autre que celui mis à la masse par l'interrupteur de court-circuit concerné. ces liaisons 46A, 46B permettent de détecter que le module de protection testé est défaillant alors que l'un quelconque de ses deux parafoudres est seul court-circuité.

En pratique, chaque interrupteur de court-circuit 6A, 6B et sa liaison associée 46B, 46A sont constitués par un fil électrique isolé.

Les deux fils isolés isolent le point 2A du point 2B ainsi que ces deux points du point 8, quand les parafoudres ne sont pas court-circuités. Ils bouclent les deux fils de ligne l'un sur l'autre dès que l'un des parafoudres est court-circuité. Chacun d'eux est interposé et maintenu avec son isolation entre un contact d'entrée correspondant à l'un des points d'entrée 2A et 2B et un contact prévu côté masse et correspondant au point 8, ces contacts étant reliés aux deux bornes de l'un des parafoudres. Chacun d'eux est par ailleurs dénudé et relié au contact d'entrée correspondant à l'autre des points 2A et 2B. Le montage d'un tel interrupteur de court-circuit, 6A, 6B avec cette liaison 46B, 46A dans le module de protection est du même type que celui qui est décrit dans la demande de brevet ayant pour titre "Module de protection à signalisation de défaut et ensemble de raccordement à protection" déposée le même jour par la demanderesse mais qui ne comporte pas toutefois le croisement des liaisons pour boucler les deux fils de la ligne l'un sur l'autre.

Le module de test est successivement enfiché sur les N modules de protection, à la suite du déclenchement du disjoncteur 10. La diode électroluminescente 32 s'allume dès lors qu'aucun des deux parafoudres du module de protection testé n'est court-circuité. Elle reste par contre éteinte si l'un quelconque des deux parafoudres du module de protection testé est court-circuité ou si les deux parafoudres sont court-circuités et indique que ce module est défaillant.

Après le test des N modules de protection, les modules défaillants sont changés, en prenant soin préalablement de supprimer un défaut permanent sur les lignes concernées.

La présence d'un défaut permanent sur chaque ligne concernée est détectée par le disjoncteur 10, qui est réeclenché à cet effet et qui se déclenche alors à nouveau en provoquant le réallumage de la diode électroluminescente 20. Les lignes sont alors testées de manière habituelle pour cerner la cause du défaut permanent et la supprimer.

En regard de cette figure 3, on note que les deux parafoudres bipolaires peuvent être remplacés par un parafoudre tripolaire, auquel sont alors associés les deux éléments précités de court-circuit munis de leur liaison de bouclage des deux fils de la ligne. Dans ces conditions chacun de ces deux éléments de court-circuit est relié comme précédemment entre la borne dite de masse et l'une ou l'autre des deux autres bornes du parafoudre tripolaire alors concerné.

En regard de cette figure 3, on indique également que le circuit de test peut en variante comporter deux diodes électroluminescentes, montées selon une disposition tête bêche entre les deux fils de cordon de test avec une résistance série associée à chacune d'elles, mais sans le pont de quatre diodes précédemment associé à la diode électroluminescente unique.

## Revendications

1. Circuit de communication à signalisation de défaut, comportant un ensemble de raccordement de N lignes d'un câble et de N jarretières, N modules de protection des N lignes individuelles raccordées aux jarretières, une première lampe de signalisation de défaut sur au moins l'une des N lignes, et un circuit d'alimentation de ladite première lampe, chaque module de protection étant équipé d'au moins un parafoudre et d'au moins un élément thermique de court-circuit associé, chacun relié à l'un des fils de l'une des lignes et destiné à écouler un courant de défaut vers une masse, caractérisé en ce qu'il comporte en outre un disjoncteur à déclenchement thermique (10), reliant chaque parafoudre (5A, 5B) et chaque élément de court-circuit associé (6A, 6B) à ladite masse (4) et comportant d'une part un interrupteur principal commandé (13), monté en série avec un organe thermique de commande (11) et court-circuité par une première liaison directe en parallèle (14), pour l'écoulement dudit courant de défaut de l'une des lignes à ladite masse, et d'autre part un interrupteur auxiliaire (16) couplé audit interrupteur principal (13) et interposé sur ledit circuit d'alimentation de ladite première lampe (20), pour l'alimentation de ladite première lampe (20) quand ledit disjoncteur (10) est déclenché.

2. Circuit de communication selon la revendication 1, caractérisé en ce que ledit disjoncteur (10) et chacun des éléments de court-circuit (6A, 6B) des parafoudres (5A, 5B) des modules de protection (1) présentent des courbes individuelles de déclenchement (C₂, C₁) ayant une même allure générale, avec un retard de déclenchement dudit disjoncteur par rapport au déclenchement de l'un quelconque desdits éléments de court-circuit.

3. Circuit de communication selon la revendication 2, caractérisé en ce que ledit disjoncteur (10) comporte en outre une résistance (12), montée en série avec ledit organe thermique de commande (11) et ledit interrupteur principal (13), et une deuxième liaison directe (15) de court-circuit dudit organe thermique de commande et de ladite résistance quand le disjoncteur est déclenché.

4. Circuit de communication selon la revendication 3, caractérisé en ce que ledit organe thermique de commande (11) est un bilame sensible au courant le traversant.

5. Circuit de communication selon l'une des revendications 2 à 4, caractérisé en ce qu'il comporte en outre un avertisseur sonore (25) relié audit interrupteur auxiliaire (16), pour l'alimentation dudit avertisseur sonore simultanément avec ladite première lampe (20).

6. Circuit de communication selon la revendication 5, caractérisé en ce que ledit avertisseur sonore (25) est commun à plusieurs ensembles de raccordement, identiques entre eux pour les différentes lignes concernées les desservant individuellement, et est relié à l'interrupteur auxiliaire (16, 16') du disjoncteur de chacun desdits ensembles de raccordement, pour l'alimentation dudit avertisseur sonore quand le disjoncteur d'au moins l'un desdits ensembles de raccordement est déclenché.

7. Circuit de communication selon la revendication 6, caractérisé en ce qu'il comporte des liaisons de découplage (26, 27) entre ledit avertisseur sonore (25) et l'interrupteur auxiliaire (16, 16') de chaque disjoncteur.

8. Circuit de communication selon l'une des revendication 2 à 7, caractérisé en ce que chaque module de protection comporte deux éléments de court-circuit (6A, 6B,) associé à un parafoudre tripolaire ou deux parafoudres bipolaires et chaque élément de court-circuit est muni d'une liaison de bouclage (46B, 46A) de l'un des fils de la ligne sur l'autre fil de cette ligne, quand au moins l'un desdits éléments de court-circuit est déclenché.

9. Circuit de communication selon la revendication 8, caractérisé en ce chacun des deux éléments de court-circuit (6A, 6B) et la liaison de bouclage correspondante sont constitués par fil isolé, qui est interposé avec isolation entre des moyens de raccordement d'une part de l'un des fils de la ligne à une borne du parafoudre relié à ce fil de la ligne et d'autre part d'une autre borne dite de masse du parafoudre audit disjoncteur et qui est par ailleurs dénudé et relié à l'autre fil de la ligne.

10. Circuit de communication selon l'une des revendications 2 à 9, caractérisé en ce qu'il comporte en outre un module de test (30), affecté au test successif des N modules de protection, comportant au moins une deuxième lampe de test (32) et muni d'un cordon de test (30) relié à chaque deuxième lampe et enfichable sur l'un des dits modules de protection (1), pour la connexion dudit module de test à la ligne protégée par le module de protection testé et l'alimentation de chaque deuxième lampe (32) par cette ligne si le parafoudre relié à au moins l'un des fils de la ligne n'est pas court-circuité par ledit élément de court-circuit associé.

11. Circuit de communication selon la revendication 10, caractérisé en ce que ledit module de test (30) comporte une seule deuxième lampe (32) et un pont (34) de quatre diodes ayant deux bornes opposées sur ledit pont reliées à ladite seule deuxième lampe et à une résistance série associée et deux autres bornes également opposées reliées aux fils du cordon de test (31), pour l'alimentation de la seule deuxième lampe à partir de l'un quelconque des fils de la ligne, si l'élément de court-circuit relié à l'un ou l'autre des fils de la ligne n'est pas déclenché.
